# EUROPÄISCHE PATENTSCHRIFT

(11) **EP 3 031 321 B1**
(45) Veröffentlichungstag und Bekanntmachung des Hinweises auf die Patenterteilung: **28.10.2020**
(21) Anmeldenummer: 14197635.7
(22) Anmeldetag: 12.12.2014
(51) Int. Cl.: A01M 29/10, A01M 29/20, A01M 29/24

(54) **Vorrichtung und Verfahren zur Abwehr von Kleinsäugern**
Device and method for protection against small mammals
Dispositif et procédé destinés à repousser des micro-mammifères

(43) Veröffentlichungstag der Anmeldung: 15.06.2016
(73) Patentinhaber: K&K Handelsgesellschaft mbH, 68723 Oftersheim (DE)
(72) Erfinder: LANG, Markus, 68723 Oftersheim (DE)
(74) Vertreter: Isarpatent

(56) Entgegenhaltungen:
- DE-A1-102006 051 662
- DE-U1-202010 009 217
- DE-U1-202010 009 534
- US-A- 5 949 636
- US-A1- 2003 184 442

## Beschreibung

Die Erfindung betrifft eine Vorrichtung und ein Verfahren zur Abwehr von Kleinsäugern, insbesondere von Mardern.

Kleinsäuger, insbesondere Marder, können durch Verbiss von Kabeln und Schläuchen, insbesondere im Motorraum eines Fahrzeuges, erhebliche Beschädigungen verursachen. Dringt beispielsweise ein Marder in den Motorraum eines geparkten Fahrzeuges ein, kann er elektrische Kabel, beispielsweise das Zündkabel, und sonstige Gummischläuche beschädigen, sodass die Fahrtüchtigkeit und Sicherheit des Fahrzeuges beinträchtigt wird.

Es sind Abwehrsysteme zur Abwehr von Mardern verbreitet, die über unterschiedliche Abwehrmechanismen zur Abwehr von Mardern verfügen. Die Abwehrmechanismen umfassen Aktoreinheiten, die auf einen in den Motorraum eindringenden Marder derart einwirken, dass dieser den Motorraum wieder verlässt. Hierzu erzeugen herkömmliche Abwehrsysteme akustische und/oder optische Signale, welche einen eindringenden Kleinsäuger derart stören, dass er den Motorraum des Fahrzeuges verlässt. Herkömmliche Mardersysteme verwenden insbesondere Überschallsender, welche Ultraschallsignale zur Vertreibung des Kleinsäugers aus dem Motorraum ausstrahlen. Weiterhin sind herkömmliche Abwehrsysteme zur Abwehr von Kleinsäugern mit Aktoreinheiten ausgestattet, die bei Berührung durch den Kleinsäuger einen elektrischen Hochspannungsschlag an dem Kleinsäuger abgeben, um diesen zu vertreiben.

Zur Erzeugung einer dauerhaften Hochspannung oder fortwährender Hochspannungsimpulse oder ggf. Ultraschalltönen zur Abwehr von Kleinsäugern werden die Abwehrsysteme durch eine Stromversorgungsquelle mit Energie versorgt. Derartige Abwehrsysteme betreiben die unterschiedlichen Abwehrmechanismen dauerhaft oder in regelmäßigen periodischen Zeitabständen. Da die Abwehrmechanismen durch eine lokale Stromversorgungsquelle, beispielsweise eine Batterie, mit Energie versorgt werden, führt dies zu einer Belastung oder sogar Erschöpfung der Energieversorgungsquelle, sodass die Betriebsdauer derartiger herkömmlicher Abwehrsysteme relativ gering ist. Vor allem bei einem autonomen Abwehrsystem, das nicht an eine Fahrzeugbatterie bzw. einen Fahrzeugakkumulator eines Fahrzeuges angeschlossen wird, führt die ständige Entladung der Energieversorgungsquelle des autonomen Abwehrsystems, beispielsweise einer dafür vorgesehenen Batterie, dazu, dass die Betriebsdauer eines solchen autonomen Abwehrsystems relativ gering ist.

Es wurde daher in der DE 20 2010 009 534 U1 eine betriebsspannungsabhängige Einschaltung des elektrischen Marderabwehrgerätes vorgeschlagen. Bei dem dort beschriebenen System erfolgt die Einschaltung des Marderabwehrgerätes erst, wenn die Akkuspannung wegen des abgeschalteten Ladevorgangs sinkt. Sobald ein Fahrzeug parkt, ist die Lichtmaschine ausgeschaltet, sodass die Akkuspannung des Autoakkus absinkt. Sobald ein Absinken der Akkuspannung erfasst wird, wird bei diesem - herkömmlichen System das Marderabwehrgerät eingeschaltet. Bei diesem System erfolgt somit die Aktivierung der Marderabwehr, sobald das Fahrzeug geparkt ist.

Bei einem autonomen Marderabwehrsystem mit einer eigenen Energieversorgungsquelle bzw. Stromversorgungsquelle führt jedoch ein längeres Parken des Fahrzeuges ebenfalls zu einem Entladen der Energieversorgungsquelle und somit zu einer geringen Betriebsdauer.

In der DE 199 02 154 A1 wird eine nachrüstbare Alarmanlage gegen Marderverbiss im Motorraum beschrieben, bei welcher ein Abwehrmechanismus zur Abwehr des Kleinsäugers bzw. Marders erst bei Erkennen eines Marders aktiviert wird. Das Eindringen des Marders in den Motorraum wird dabei sensorisch mithilfe von Bewegungsmeldern, Erschütterungssensoren, Kontaktschaltern oder mithilfe einer Lichtschranke erkannt. Die in der DE 199 02 154 A1 beschriebene nachrüstbare Alarmanlage gegen Marderverbiss ist jedoch nicht besonders zuverlässig und führt oft zu Fehlalarmen. Darüber hinaus benötigt die in der DE 199 02 154 A1 beschriebene Anlage neben dem Abwehrmechanismus, beispielsweise einer automatischen Sprühvorrichtung, separate Sensoren, die das Eindringen des Kleinsäugers in den Motorraum erfassen. Hierdurch wird die Komplexität des Systems erhöht und dessen Funktionszuverlässigkeit vermindert. Ferner ist aufgrund der neben dem Abwehrmechanismus vorgesehenen separaten Sensorik der Montageaufwand zur Montage der Anlage im Motorraum hoch.

Die US 5 949 636 A zeigt ein Abwehrsystem zur Abwehr von Kleinsäuger, welches bei einer Berührung einer Elektrode durch einen Kleinsäuger einen Elektroschock an diesen aussendet.

Es ist eine Aufgabe der vorliegenden Erfindung ein Abwehrsystem zur Abwehr von Kleinsäugern zu schaffen, das Kleinsäuger zuverlässig abwehrt und die obengenannten Nachteile auszuräumen

Diese Aufgabe wird erfindungsgemäß durch ein Abwehrsystem mit den in Patentanspruch 1 angegebenen Merkmalen gelöst.

Die Erfindung schafft demnach ein Abwehrsystem zur Abwehr von Kleinsäugern mit mindestens einer Aktoreinheit, die auf einen in einen überwachten Raum, insbesondere Motorraum, eindringenden Kleinsäuger derart einwirkt, dass der Kleinsäuger diesen Raum verlässt, wobei die Aktoreinheit automatisch aktiviert wird, sobald der Kleinsäuger in den überwachten Raum eindringt, wobei das Abwehrsystem dadurch gekennzeichnet ist, dass die Aktoreinheit mindestens eine Hochspannungsaktoreinheit aufweist, die Elektroden hat, die bei Berührung durch einen Kleinsäuger eine Hochspannung an diesen Kleinsäuger abgeben und die gleichzeitig Kondensatorplatten von mindestens einem Kondensator einer kapazitiven Sensoreinheit bilden, die das Eindringen des Kleinsäugers in den überwachten Raum berührungslos erfasst.

Bei dem erfindungsgemäßen Abwehrsystem ist die Sensorik zur Erkennung des eindringenden Kleinsäugers und der Abwehrmechanismus zur Abwehr des eindringenden Kleinsäugers in einer Einheit integriert, nämlich in einer Hochspannungsaktoreinheit. Das erfindungsgemäße Abwehrsystem bietet somit den Vorteil, dass keine separaten Sensoren zur Erkennung des Kleinsäugers in dem überwachten Raum vorgesehen und darin montiert werden müssen. Hierdurch sinkt die Komplexität des Abwehrsystems, wodurch gleichzeitig die Zuverlässigkeit des Abwehrsystems erhöht wird. Weiterhin wird hierdurch der Montageaufwand zur Montage des Abwehrsystems in den überwachten Raum, insbesondere einem Motorraum eines Fahrzeuges, erheblich reduziert.

Ein weiterer Vorteil des erfindungsgemäßen Abwehrsystems besteht darin, dass eine Aktivierung der Hochspannungsaktoreinheit erst erfolgt, nachdem ein konkretes Schadensszenario vorliegt, d.h., nachdem das Eindringen eines Kleinsäugers in den überwachten Raum sensorisch erfasst worden ist. Die Hochspannungsaktoreinheit des erfindungsgemäßen Abwehrsystems wird erst aktiviert, nachdem der Kleinsäuger in den überwachten Raum, beispielsweise den Motorraum, eingedrungen ist. Dies hat zur Folge, dass der Energie- bzw. Stromverbrauch der Hochspannungsaktoreinheit relativ gering ist, sodass die Betriebsdauer des erfindungsgemäßen Abwehrsystems entsprechend hoch ist.

Ein weiterer Vorteil des erfindungsgemäßen Abwehrsystems besteht darin, dass die Erkennung des eindringenden Kleinsäugers durch die kapazitive Sensoreinheit berührungslos und unabhängig von den in dem überwachten Raum bestehenden Lichtverhältnissen erfolgt. Hierdurch ist die Zuverlässigkeit bei der Erkennung des Eindringens eines Kleinsäugers in den überwachten Raum besonders hoch. Insbesondere wird die Anzahl von Fehlauslösungen hierdurch minimiert.

Bei einer möglichen Ausführungsform des erfindungsgemäßen Abwehrsystems weist der Kondensator der kapazitiven Sensoreinheit eine Kapazität auf, die durch das organische Gewebe des in den überwachten Raum eindringenden Kleinsäugers veränderbar ist.

Bei einer weiteren möglichen Ausführungsform des erfindungsgemäßen Abwehrsystems sind mehrere Hochspannungsaktoreinheiten über ein Hochspannungskabel miteinander verbunden und in dem überwachten Raum verteilt angeordnet. Indem mehrere Hochspannungsaktoreinheiten an ein gemeinsames Hochspannungskabel angeschlossen sind, sinkt der Montageaufwand zur Montage des Abwehrsystems in dem überwachten Raum erheblich.

Bei einer weiteren möglichen Ausführungsform des erfindungsgemäßen Abwehrsystems ist die kapazitive Sensoreinheit einer Hochspannungsaktoreinheit über das Hochspannungskabel an eine Auswerteeinheit eines Steuergerätes des Abwehrsystems angeschlossen, die über das Hochspannungskabel empfangene Sensorsignale der kapazitiven Sensoreinheit auswertet. Die elektrischen Leitungen des Hochspannungskabels dienen somit nicht nur zur Übertragung der Hochspannung, sondern auch zur Übertragung der durch die kapazitive Sensoreinheit erzeugten Sensorsignale. Das Hochspannungskabel erfüllt somit eine doppelte Funktion, sodass die Anzahl der notwendigen Bauelemente bei dem erfindungsgemäßen Abwehrsystem minimiert ist. Hierdurch wird die Zuverlässigkeit des erfindungsgemäßen Abwehrsystems gesteigert und gleichzeitig der Montageaufwand verringert.

Bei einer weiteren möglichen Ausführungsform des erfindungsgemäßen Abwehrsystems weist das Steuergerät des Abwehrsystems eine Spannungsquelle zur Bereitstellung einer elektrischen Gleichspannung und einen Hochspannungsgenerator zur Erzeugung einer Hochspannung auf. Das Steuergerät des erfindungsgemäßen Abwehrsystems verfügt bei dieser Ausführungsform über eine eigene elektrische Gleichspannungsquelle, insbesondere eine Batterie. Dies bietet den Vorteil, dass das erfindungsgemäße Abwehrsystem autonom ist und nicht an eine externe Spannungsquelle, insbesondere eine Fahrzeugbatterie, des Fahrzeuges angeschlossen werden muss.

Bei einer weiteren möglichen Ausführungsform des erfindungsgemäßen Abwehrsystems wird der Hochspannungsgenerator des Steuergerätes durch die Auswerteeinheit des Steuergerätes aktiviert, sobald ein von einer kapazitiven Sensoreinheit empfangenes Sensorsignal das Eindringen eines Kleinsäugers in den überwachten Raum anzeigt. Die Aktivierung des Hochspannungsgenerators innerhalb des Steuergerätes erfolgt somit erst, nachdem ein Kleinsäuger in den überwachten Raum eingedrungen ist. Hierdurch wird der Strom- bzw. Energieverbrauch minimiert und somit die Betriebsdauer des erfindungsgemäßen Abwehrsystems gesteigert.

Bei einer weiteren möglichen Ausführungsform des erfindungsgemäßen Abwehrsystems weist das Steuergerät des Abwehrsystems eine Nutzerschnittstelle auf, die einem Nutzer Zustandsinformationen des Abwehrsystems anzeigt. Diese Zustandsinformationen umfassen beispielsweise einen Ladezustand einer in dem Steuergerät vorgesehenen Batterie, die Anzahl der von einer Hochspannungsaktoreinheit abgegebenen Spannungsschläge sowie Fehlermeldungen. Der Nutzer kann somit jederzeit den Betriebszustand des erfindungsgemäßen Abwehrsystems abfragen bzw. überwachen.

Bei einer weiteren möglichen Ausführungsform des erfindungsgemäßen Abwehrsystems ist zusätzlich mindestens ein optischer Sensor vorgesehen, der ein Eindringen eines Kleinsäugers in den überwachten Raum an die Auswerteeinheit des Steuergerätes des Abwehrsystems meldet. Hierdurch kann die Zuverlässigkeit bei der Erkennung des Eindringens eines Kleinsäugers erhöht werden.

Bei einer weiteren möglichen Ausführungsform des erfindungsgemäßen Abwehrsystems verfügt dieses zusätzlich über mindestens einen Berührungssensor, der das Eindringen eines Kleinsäugers in den überwachten Raum bei Berührung oder bei Auftreten von Vibrationen erfasst und an die Auswerteeinheit des Steuergerätes des Abwehrsystems meldet. Hierdurch kann die Zuverlässigkeit bei der Erkennung eines Eindringens des Kleinsäugers in den überwachten Raum zusätzlich erhöht werden.

Bei einer weiteren möglichen Ausführungsform des erfindungsgemäßen Abwehrsystems weist die Aktoreinheit des Abwehrsystems ferner eine akustische Aktoreinheit zur Abgabe von Schallsignalen auf. Diese akustische Aktoreinheit weist vorzugsweise mindestens einen Ultraschallsender zur Abgabe von Ultraschallsignalen in den überwachten Raum auf. Hierdurch wird zusätzlich auf den Kleinsäuger eingewirkt, sodass dieser den überwachten Raum verlässt.

Bei einer weiteren möglichen Ausführungsform des erfindungsgemäßen Abwehrsystems verfügt die Aktoreinheit zusätzlich über eine optische Aktoreinheit zur Abgabe von Lichtsignalen. Hierdurch wird ebenfalls zusätzlich auf den Kleinsäuger dahingehend eingewirkt, dass dieser schnell den überwachten Raum, insbesondere den Motorraum, verlässt.

Bei einer weiteren möglichen Ausführungsform des erfindungsgemäßen Abwehrsystems ist die akustische Aktoreinheit über ein separates Kabel an das Steuergerät des Abwehrsystems anschließbar. Hierdurch ist es möglich, die akustische Aktoreinheit, insbesondere einen Ultraschallsender, an einer zur Abwehr des Kleinsäugers besonders geeigneten Stelle in dem überwachten Raum zu montieren. Beispielsweise ist es möglich, den Ultraschallsender in einem Motorraum relativ weit unten anzubringen, sodass ein Kleinsäuger bereits vor Eindringen in den Motorraum durch die Ultraschallsignale gestört wird. Weiterhin ist hierdurch möglich, das Steuergerät des Abwehrsystems mit der Nutzerschnittstelle an einer dafür geeigneten Position innerhalb des überwachten Raums zu montieren, sodass es für den Nutzer bzw. die Bedienperson nach Öffnen einer Motorraumklappe besonders leicht zugänglich ist.

Bei einer weiteren möglichen Ausführungsform des erfindungsgemäßen Abwehrsystems weist der Ultraschallsender der akustischen Aktoreinheit eine schwingende Kalotte bzw. Kuppel auf, die Ultraschallsignale sphärisch in den überwachten Raum abstrahlt. Hierdurch wird der überwachte Raum, insbesondere der Motorraum, besonders effizient mit Ultraschallsignalen bestrahlt.

Bei einer weiteren möglichen Ausführungsform des erfindungsgemäßen Abwehrsystems ist der mindestens eine Kondensator der kapazitiven Sensoreinheit in einem Spannungsteiler oder einer Messbrücke verschaltet, wobei eine an dem Kondensator aufgrund der Kapazitätsänderung durch den eindringenden Kleinsäuger auftretende Spannungsänderung gemessen und durch einen Mikroprozessor der Auswerteeinheit innerhalb des Steuergerätes des Abwehrsystems ausgewertet wird.

Bei einer weiteren möglichen Ausführungsform des erfindungsgemäßen Abwehrsystems ist der mindestens eine Kondensator der kapazitiven Sensoreinheit in einem Schwingkreis verschaltet, wobei eine aufgrund der Kapazitätsänderung auftretende Verstimmung der Schwingkreisfrequenz erfasst und durch einen Mikroprozessor der Auswerteeinheit innerhalb des Steuergerätes des Abwehrsystems ausgewertet wird.

Bei einer weiteren möglichen Ausführungsform des erfindungsgemäßen Abwehrsystems wird eine aufgrund der Kapazitätsänderung auftretende Änderung einer Lade-/Entladezeitkonstante beim Laden oder Entladen des mindestens einen Kondensators der kapazitiven Sensoreinheit erfasst und durch einen Mikroprozessor der Auswerteeinheit innerhalb des Steuergerätes ausgewertet.

Die Erfindung schafft ferner gemäß einem weiteren Aspekt eine Hochspannungsaktoreinheit für ein erfindungsgemäßes Abwehrsystem mit den in Patentanspruch 10 angegebenen Merkmalen.

Die Erfindung schafft demnach eine Hochspannungsaktoreinheit für ein Abwehrsystem gemäß der Erfindung, wobei die Hochspannungsaktoreinheit mindestens eine Elektrode besitzt, die bei Berührung durch einen Kleinsäuger an diesen Kleinsäuger eine elektrische Hochspannung abgibt, wobei die mindestens eine Elektrode gleichzeitig eine Kondensatorplatte von mindestens einem Kondensator der kapazitiven Sensoreinheit bildet, durch welche die Hochspannungsaktoreinheit bei Eindringen des Kleinsäugers in den überwachten Raum automatisch zur Abgabe von Hochspannungsschlägen aktiviert wird.

Bei einer möglichen Ausführungsform der erfindungsgemäßen Hochspannungsaktoreinheit ist die mindestens eine Elek-trode auf einer elektrisch isolierenden Elektrodenträgerplatte mittels Kontaktschrauben montiert.

Bei einer weiteren möglichen Ausführungsform der erfindungsgemäßen Hochspannungsaktoreinheit weist die mindestens eine Elektrode der Hochspannungsaktoreinheit jeweils mehrere U-förmige Elektrodenbügel auf, die senkrecht von der Elektrodenträgerplatte abstehen. Dies bietet den besonderen Vorteil, dass die Elektrodenbügel durch das Fell eines eindringenden Kleinsäugers hindurch dessen Haut berühren und somit besonders effizient Hochspannungsschläge an den eindringenden Kleinsäuger abgeben können. Alternativ können die Elektroden auch durch Elektrodenplatten gebildet werden.

Bei einer weiteren möglichen Ausführungsform der erfindungsgemäßen Hochspannungsaktoreinheit sind die Elektroden der Hochspannungsaktoreinheit jeweils über eine Kontaktschraube mit einer in dem Hochspannungskabel verlaufenden elektrischen Leitung verbunden. Diese Leitung ist vorzugsweise an den Hochspannungsgenerator des Steuergerätes des Abwehrsystems angeschlossen.

Bei einer weiteren möglichen Ausführungsform der erfindungsgemäßen Hochspannungsaktoreinheit weist die elektrisch isolierende Elektrodenträgerplatte zwischen den darauf montierten Elektroden hervorstehende Kurzschlussbarrieren auf, die einen elektrischen Kurzschlussstrom zwischen den Elektroden der Hochspannungsaktoreinheit verhindern. Hierdurch wird vorteilhaft die Anzahl von Fehlauslösungen aufgrund von Feuchtigkeit und/oder Schmutz reduziert.

Die Erfindung schafft ferner gemäß einem weiteren Aspekt ein Verfahren zur Abwehr von Kleinsäugern mit den in Patentanspruch 13 angegebenen Merkmalen.

Die Erfindung schafft demnach ein Verfahren zum Abwehren von Kleinsäugern mit den Schritten:
Erkennen eines Eindringens eines Kleinsäugers in einen überwachten Raum anhand einer durch den Kleinsäuger verursachten Kapazitätsänderung eines Kondensators,
Aktivieren einer Hochspannungsaktoreinheit, sobald das Eindringen eines Kleinsäugers in den überwachten Raum erkannt wird und
Abgeben einer Hochspannung an den Kleinsäuger durch die Hochspannungsaktoreinheit, sobald der eindringende Kleinsäuger eine Elektrode der Hochspannungsaktoreinheit berührt, dadurch gekennzeichnet, dass
   die Hochspannungsaktoreinheit (2) Elektroden (12, 13, 14, 15) zum Abgeben einer Hochspannung an den Kleinsäuger aufweist, die gleichzeitig Kondensatorplatten des Kondensators bilden.

Im Weiteren werden mögliche Ausführungsformen des erfindungsgemäßen Abwehrsystems und des erfindungsgemäßen Verfahrens zur Abwehr von Kleinsäugern unter Bezugnahme auf die beigefügten Figuren näher beschrieben.

### Es zeigen:

- Figur 1: eine Ansicht eines möglichen Ausführungsbeispiels eines erfindungsgemäßen Abwehrsystems zur Abwehr von Kleinsäugern;
- Figur 2: ein Blockschaltbild zur Darstellung einer Ausführungsform eines in dem erfindungsgemäßen Abwehrsystem vorgesehenen Steuergerätes;
- Figur 3: eine perspektivische Ansicht zur Darstellung eines Ausführungsbeispiels einer bei dem erfindungsgemäßen Abwehrsystem verwendeten Hochspannungsaktoreinheit im montierten Zustand;
- Figur 4: eine Explosionszeichnung zur Darstellung von Baukomponenten der in Figur 3 dargestellten Hochspannungsaktoreinheit;
- Figur 5: eine perspektivische Darstellung einer bei dem erfindungsgemäßen Abwehrsystem verwendbaren akustischen Aktoreinheit;
- Figur 6: ein Ablaufdiagramm zur Darstellung eines Ausführungsbeispiels eines erfindungsgemäßen Verfahrens zur Abwehr von Kleinsäugern.

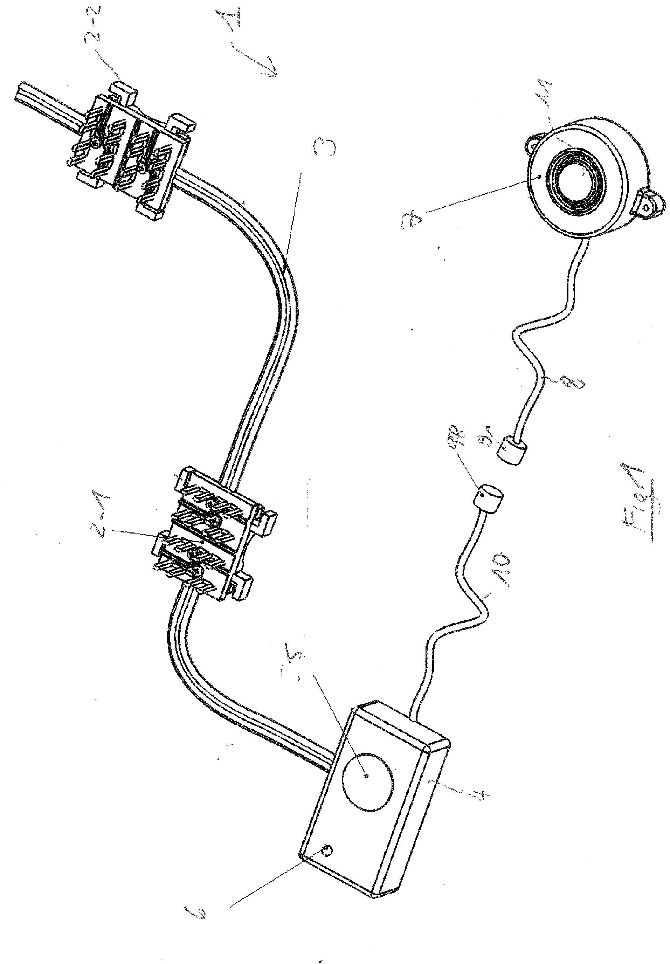

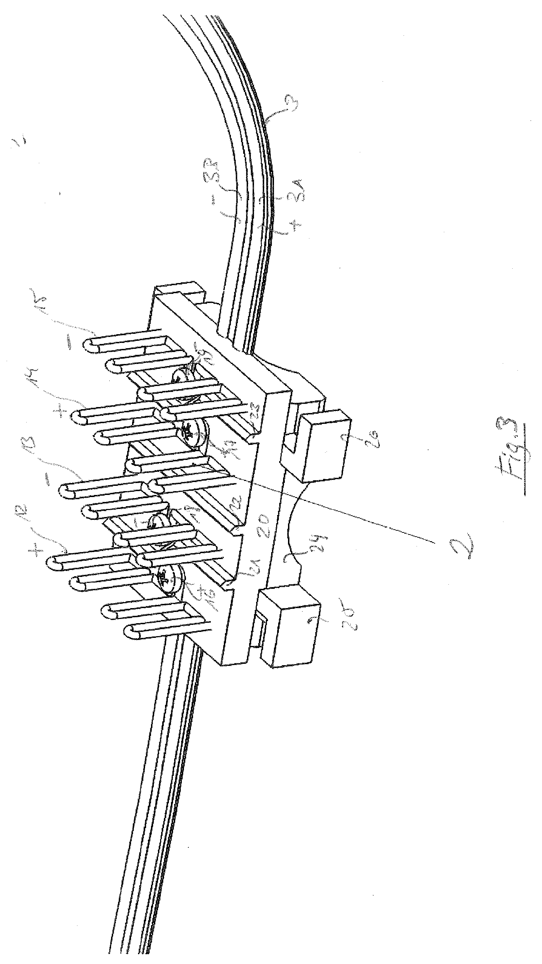

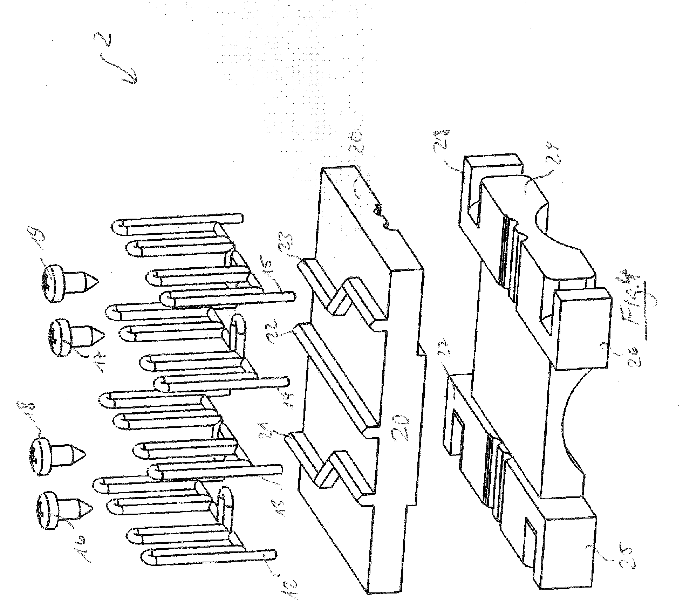

Figur 1 zeigt perspektivisch ein Ausführungsbeispiel eines erfindungsgemäßen Abwehrsystems 1 zur Abwehr von Kleinsäugern. Das in Figur 1 dargestellte Abwehrsystem 1 verfügt über mehrere Bauteile bzw. Komponenten, die in einen überwachten Raum, beispielsweise einen Motorraum eines Fahrzeuges, montiert werden können. Bei dem in Figur 1 dargestellten Ausführungsbeispiel weist das Abwehrsystem 1 mehrere Aktoreinheiten auf, die in dem überwachten Raum auf einen darin eindringenden Kleinsäuger derart einwirken, dass der Kleinsäuger diesen Raum wieder verlässt. Bei dem in Figur 1 dargestellten Ausführungsbeispiel weist das Abwehrsystem 1 zwei Aktoreinheiten 2-1, 2-2 auf, die über ein Kabel 3 an ein Steuergerät 4 des Abwehrsystems 1 angeschlossen sind. Die Aktoreinheiten 2-1, 2-2 werden automatisch aktiviert, sobald ein Kleinsäuger in einen überwachten Raum, insbesondere Motorraum eines Fahrzeuges, eindringt. Die Aktoreinheiten 2-1, 2-2 werden durch Hochspannungsaktoreinheiten gebildet, die Elektroden besitzen, welche bei Berührung durch einen Kleinsäuger eine Hochspannung an diesen Kleinsäuger abgeben. Die Elektroden bilden dabei gleichzeitig Kondensatorplatten von mindestens einem Kondensator einer kapazitiven Sensoreinheit, die das Eindringen eines Kleinsäugers in den überwachten Raum berührungslos erfasst. Die in Figur 1 gezeigten Hochspannungsaktoreinheiten sind im Detail in den Figuren 3 und 4 dargestellt. Der Kondensator der kapazitiven Sensoreinheit weist bei dem erfindungsgemäßen Abwehrsystem eine Kapazität C auf, die durch das organische Gewebe des in den überwachten Raum eindringenden Kleinsäugers veränderbar ist. Bei einer möglichen Ausführungsform erfolgt die kapazitive Erfassung des eindringenden Kleinsäugers zusätzlich über Verbindungsleitungen und Fahrzeugteile.

Das Abwehrsystem 1 weist mehrere Hochspannungsaktoreinheiten 2-1, 2-2 auf, die über das Kabel 3 miteinander verbunden sind und in dem überwachten Raum verteilt angeordnet sind. Bei dem Kabel 3 handelt es sich vorzugsweise um ein Hochspannungskabel mit zwei Leitungen zur Übertragung einer Hochspannung. Die kapazitive Sensoreinheit einer Hochspannungsaktoreinheit 2-i ist über das Hochspannungskabel 3 an eine in dem Steuergerät 4 integrierte Auswerteeinheit angeschlossen. Diese Auswerteeinheit kann Sensorsignale, welche über das Hochspannungskabel 3 übertragen werden, auswerten. Das Steuergerät 4 verfügt ferner über eine Nutzerschnittstelle, die einem Nutzer Zustandsinformationen des Abwehrsystems 1 anzeigen kann. In Figur 1 ist eine Fläche 5 zur Touchbedienung des Steuergerätes 4 dargestellt. Darüber hinaus kann das Steuergerät 4 über eine optische Statusanzeige 6 verfügen. Die von dem Steuergerät 4 angezeigten Zustandsinformationen umfassen beispielsweise einen Ladezustand einer in dem Steuergerät 4 vorgesehenen Spannungsquelle, insbesondere Batterie, eine Anzahl der von einer Hochspannungsaktoreinheit 2 abgegebenen Hochspannungsschläge und/oder die Anzeige von Fehlermeldungen. Bei einer möglichen Ausführungsform verfügt das Steuergerät 4 über einen internen Zähler, welcher die Anzahl der von einer Hochspannungsaktoreinheit 2 des Abwehrsystems 1 abgegebenen Hochspannungsschläge bzw. Hochspannungsimpulse zählt. Die Anzahl der abgegebenen Hochspannungsschläge kann über die Nutzerschnittstelle des Steuergerätes 4 dem Nutzer angezeigt werden, sodass dieser die Anzahl der Eindringvorgänge des Kleinsäugers bzw. die Anzahl der Marderattacken abfragen kann. Die Bedienung der Nutzerschnittstelle erfolgt vorzugsweise mittels einer Touchbedienung 5, d.h. kapazitiv. Der Nutzer bzw. Bediener kann mithilfe der Nutzerschnittstelle mit dem Abwehrsystem 1 interagieren. Er kann über die Nutzerschnittstelle Zustandsinformationen abfragen und Bedienbefehle für das Abwehrsystem 1 eingeben. Bei einer möglichen Ausführungsform kann der Nutzer über die Nutzerschnittstelle Betriebsfunktionen des Abwehrsystems 1 parametrisieren. Beispielsweise kann der Nutzer bei einer möglichen Ausführungsform die Anzahl und die Amplitude der abgegebenen Hochspannungsimpulse konfigurieren bzw. einstellen. Ein in dem Steuergerät 4 enthaltener Hochspannungsgenerator wird bei einer möglichen Ausführungsform aktiviert, sobald ein von einer kapazitiven Sensoreinheit empfangenes Sensorsignal ein Eindringen des Kleinsäugers in den überwachten Raum anzeigt. Das Sensorsignal wird dabei vorzugsweise über eine elektrische Leitung des Kabels 3 zu dem Steuergerät 4 übertragen.

Bei dem in Figur 1 dargestellten Ausführungsbeispiel verfügt das Abwehrsystem 1 neben den Hochspannungsaktoreinheiten 2-1, 2-2 zusätzlich über eine akustische Aktoreinheit zur Abgabe von Schallsignalen. Bei dem in Figur 1 dargestellten Ausführungsbeispiel weist die akustische Aktoreinheit einen Ultraschallsender 7 auf, der über eine Leitung 8 an einen Steckverbinder 9A, 9B und über eine Leitung 10 an das Steuergerät 4 des Abwehrsystems 1 anschließbar ist. Der Ultraschallsender 7 kann somit über ein separates Kabel 8, 10 an das Steuergerät 4 angeschlossen werden. Dies bietet den besonderen Vorteil, dass der Ultraschallsender 7 an einer besonders günstigen Stelle innerhalb des zu überwachenden Raumes angebracht werden kann. Beispielsweise bietet die Montage des Ultraschallsenders 7 in einem unteren Bereich eines Motorraums den Vorteil, dass ein Kleinsäuger bereits vor dem Eindringen mit einem störenden Ultraschallsignal beaufschlagt wird, sodass er ggf. von einem Eindringen in den Motorraum gänzlich absieht. Weiterhin erlaubt die räumliche Trennung des Steuergerätes 4 und des Ultraschallsenders 7, das Steuergerät 4 an einem oberen für einen Nutzer besonders leicht erreichbaren Teil des Motorraums zu montieren. Wie in Figur 1 erkennbar, weist der Ultraschallsender 7 eine schwingende halbkugelförmige Kuppel 11 auf, durch die Ultraschallsignale sphärisch in den überwachten Raum abgestrahlt werden. Hierdurch kann eine besonders gute Abdeckung des überwachten Raums, insbesondere Motorraums, durch ausgestrahlte Ultraschallwellen erreicht werden.

Das in Figur 1 dargestellte Abwehrsystem 1 kann bei einer möglichen Ausführungsform durch weitere Sensoreinheiten erweitert werden. Bei einer möglichen Ausführungsform ist mindestens ein optischer Sensor vorgesehen, der das Eindringen des Kleinsäugers in den überwachten Raum der Auswerteeinheit des Steuergerätes 4 meldet. Darüber hinaus kann als weitere Sensoreinheit mindestens ein Berührungssensor vorgesehen werden, der das Eindringen eines Kleinsäugers in den überwachten Raum bei Berührung oder bei Auftreten von Vibrationen erfasst und an die Auswerteeinheit des Steuergerätes 4 meldet. Die optische Erfassung kann dabei mittels Infrarotstrahlung erfolgen. Zur Montage können die in Figur 1 dargestellten Hochspannungsaktoreinheiten 2-1, 2-2 auf das in dem überwachten Raum, insbesondere Motorraum, verlegte Kabel 3 aufgesetzt werden und entlang des Kabels 3 zur genauen Positionierung verschoben werden. Mithilfe von Kontaktschrauben können anschließend die Hochspannungsaktoreinheiten 2-1, 2-2 auf das Hochspannungskabel 3 geschraubt werden.

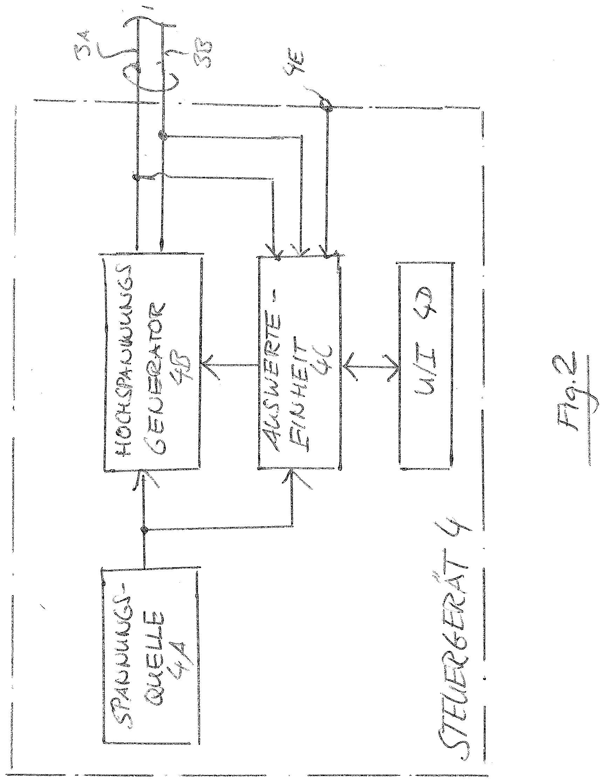

Figur 2 zeigt ein Blockschaltbild zur Darstellung eines Ausführungsbeispiels eines Steuergerätes 4 des erfindungsgemäßen Abwehrsystems 1. Das Steuergerät 4 enthält eine Spannungsquelle 4A, beispielsweise eine austauschbare Batterie oder einen Akkumulator. Die Spannungsquelle 4A liefert eine Gleichspannung an einen Hochspannungsgenerator 4B des Steuergerätes 4. Der Hochspannungsgenerator 4B wird durch eine Auswerteeinheit 4C des Steuergerätes 4 angesteuert, die ebenfalls von der Spannungsquelle 4A mit Strom versorgt wird. Der Hochspannungsgenerator 4B ist an Leitungen 3A, 3B des Hochspannungskabels 3 des Abwehrsystems 1 angeschlossen. Die Auswerteeinheit 4C ist ebenfalls mit den beiden Leitungen 3A, 3B des Hochspannungskabels 3 verbunden, wie in Figur 2 dargestellt. Die Auswerteeinheit 4C wertet empfangene Sensorsignale, die über die Leitungen 3A, 3B des Kabels 3 erhalten werden, zur Erfassung eines eindringenden Kleinsäugers in den überwachten Raum aus und aktiviert automatisch den Hochspannungsgenerator 4B, sobald das Eindringen eines Kleinsäugers anhand der empfangenen Sensorsignale seitens der Auswerteeinheit 4C erkannt wird. Hierdurch wird der Hochspannungsgenerator 4B erst aktiviert, wenn ein konkretes Schadensszenario droht, d.h., wenn vermutlich ein Kleinsäuger in den überwachten Raum, insbesondere Motorraum, eingedrungen ist. Da der Hochspannungsgenerator 4B erst bei einem derartigen konkreten Schadensszenario mit Strom durch die Spannungsquelle 4A versorgt werden muss, ist der auftretende Strom bzw. Energieverbrauch relativ gering, sodass die Betriebsdauer des erfindungsgemäßen Abwehrsystems 1 relativ hoch ist. Bei der Spannungsquelle 4A kann es sich um mindestens eine austauschbare Batterie handeln, die eine relativ niedrige Spannung von einigen Volt liefert. Der Hochspannungsgenerator 4B kann eine Hochspannung von einigen 100 Volt, beispielsweise 200 bis 300 Volt, generieren, sobald er durch die Auswerteeinheit 4C aktiviert worden ist.

Das Steuergerät 4 verfügt über eine Nutzerschnittstelle 4D, die beispielsweise über die in Figur 1 dargestellte Touchfläche 5 bedienbar ist. Über die Nutzerschnittstelle besteht für den Nutzer die Möglichkeit, Zustandsinformationen des Abwehrsystems 1 abzufragen. Die abfragbaren Zustandsinformationen umfassen beispielsweise den Ladezustand der Spannungsquelle 4A, die Anzahl der abgegebenen Hochspannungsimpulse bzw. die Anzahl der Eindringvorgänge sowie Fehlermeldungen, beispielsweise hinsichtlich einer Verschmutzung des Abwehrsystems 1. Das Steuergerät 4 hat vorzugsweise ein wasserdichtes Gehäuse. Das Kabel 3 kann bei einer möglichen Ausführungsform integral mit dem Steuergerät 4 verbunden sein. Wie in Figur 2 dargestellt, verfügt das Steuergerät 4 zusätzlich über einen Anschluss 4E zur Verbindung des in Figur 1 dargestellten Kabels 10, um einen Ultraschallsender 7 mit dem Steuergerät 4 zu verbinden. Bei einer weiteren möglichen Ausführungsform besitzt das Steuergerät 4 eine zusätzliche Datenschnittstelle, welche die Auswerteeinheit 4C mit einem Datenbus eines Fahrzeuges verbindet. Bei einer möglichen Ausführungsform enthält die Auswerteeinheit 4C eine Datenverarbeitungseinheit, insbesondere einen Mikroprozessor, welcher die über das Kabel 3 empfangenen Sensorsignale auswertet. Bei einer möglichen Ausführungsform ist der Kondensator der kapazitiven Sensoreinheit in einem Spannungsteiler oder einer Messbrücke verschaltet. Eine an dem Kondensator aufgrund des Eindringens des Kleinsäugers hervorgerufene Kapazitätsänderung ΔC führt dabei zu einer Spannungsänderung ΔU die durch den Mikroprozessor der Auswerteeinheit 4C erfasst wird. Die Kapazität C des Kondensators ändert sich durch Änderung eines Dielektrikums im elektrischen Feld des Kondensators. Das Dielektrikum des Kondensators wird vor dem Eindringen des Kleinsäugers in den überwachten Raum durch die Umgebungsluft gebildet. Durch das organische Gewebe des in den überwachten Raum eindringenden Kleinsäugers verändert sich die relative Dielektrizitätskonstante des Dielektrikums und somit dessen Kapazität C. Diese Kapazitätsänderung ΔC kann durch die Auswerteeinheit 4C ausgewertet werden. Bei einer möglichen Ausführungsform werden in einer Reihenschaltung aus zwei Kondensatoren oder in einer Messbrücke bei angelegter Spannung die Spannungsverhältnisse an den einzelnen Bauteilen bestimmt. Ändert sich die Kapazität C eines Kondensators, insbesondere aufgrund der Änderung seines Dielektrikums infolge des Eindringens des Kleinsäugers, verändern sich die Spannungsverhältnisse der elektronischen Schaltung, wobei dies mithilfe eines Komparators oder eines Mikrocontrollers erkannt wird.

Bei einer weiteren möglichen Ausführungsform ist der Kondensator C der kapazitiven Sensoreinheit in einem Schwingkreis verschaltet, wobei eine aufgrund der Kapazitätsänderung ΔC auftretende Verstimmung der Schwingkreisfrequenz f erfasst und durch den Mikroprozessor der Auswerteeinheit 4C ausgewertet werden kann. Der Schwingkreis besteht bei dieser Ausführungsform aus verschiedenen elektrischen Bauteilen, die zueinander derart angeordnet sind, dass es zu einer harmonischen fortlaufenden elektrischen Schwingung mit bestimmter Frequenz kommt. In dem Schwingkreis befindet sich ein Kondensator, dessen Kapazität C durch das sich verändernde Dielektrikum verändert wird. Hierdurch verschiebt sich die Schwingkreisfrequenz des Schwingkreises. Die Veränderung der Schwingkreisfrequenz f kann wiederum durch einen Komparator oder einen Mikrocontroller bzw. Mikroprozessor der Auswerteeinheit 4C des Steuergerätes 4 erfasst werden.

Bei einer weiteren möglichen Ausführungsform wird eine aufgrund der Kapazitätsänderung ΔC auftretende Änderung einer Lade-/Entladezeitkonstante Δ*τ* beim Laden bzw. Entladen des mindestens einen Kondensators der kapazitiven Sensoreinheit erfasst und durch einen Mikroprozessor der Auswerteeinheit 4C ausgewertet. Der Kondensator besitzt eine bestimmte Ladezeitkonstante. Bei angelegter Spannung vergeht eine bestimmte Zeit, bis der Kondensator aufgeladen ist. Die hierfür nötige Zeit ist abhängig von der Kondensatorkapazität C des Kondensators. Ändert sich die Kapazität C des Kondensators infolge des Eindringens eines Kleinsäugers in sein Dielektrikum, ändert sich auch die notwendige Zeit, bis der entsprechende Kondensator aufgeladen ist. Die Veränderung der Lade-/Entladezeitkonstante Δ*τ* kann durch eine elektronische Schaltung, beispielsweise durch einen Komparator oder einen Mikrocontroller der Auswerteeinheit 4C erfasst werden.

Figur 3 zeigt ein Ausführungsbeispiel einer Hochspannungsaktoreinheit 2, wie sie bei dem erfindungsgemäßen Abwehrsystem 1 eingesetzt werden kann. Die Hochspannungsaktoreinheit 2 besitzt mindestens eine Elektrode, die bei Berührung durch einen eindringenden Kleinsäuger eine Hochspannung an diesen Kleinsäuger abgibt. Diese Elektroden bilden gleichzeitig Kondensatorplatten von mindestens einem Kondensator der kapazitiven Sensoreinheit, die das Eindringen des Kleinsäugers in den überwachten Raum berührungslos erfasst. Bei dem in Figur 3 dargestellten Ausführungsbeispiel verfügt die Hochspannungsaktoreinheit 2 über vier Elektroden 12, 13, 14, 15. An diese Elektroden 12 bis 15 liegt nach Aktivierung des Hochspannungsgenerators 4B alternierend eine Hochspannung unterschiedlicher Polarität an. Das Hochspannungskabel 3 verfügt über Leitungen 3A, 3B zur Übertragung der generierten Hochspannung von dem Steuergerät 4 an die Hochspannungsaktoreinheit 2. Bei dem in Figur 3 dargestellten Beispiel wird über die erste Leitung 3A eine positive Hochspannung (+)und über die zweite Leitung 3B eine negative Hochspannung (-) geführt. Bei einer möglichen Ausführungsform ist die Polarität einer an einer Elektrode angelegten Hochspannung umschaltbar. Bei dem in Figur 3 dargestellten Ausführungsbeispiel sind die beiden Elektroden 12, 14 über Kontaktschrauben 16, 17 mit der ersten Leitung 3A des Kabels 3 verbunden und die beiden übrigen Elektroden 13, 15 über Kontaktschrauben 18, 19 mit der zweiten Leitung 3B des Kabels 3 verbunden. Demzufolge liegt nach Aktivierung des Hochspannungsgenerators 4B innerhalb des Steuergerätes 4 an den Elektroden 12, 14 eine positive Hochspannung(+) und an den Elektroden 13, 15 eine negative Hochspannung (-) an. Die Anzahl der Elektroden kann bei unterschiedlichen Ausführungsformen der Hochspannungsaktoreinheit 2 variieren. Die Hochspannungsaktoreinheit 2 verfügt über mindestens eine Elektrode, die eine positive oder eine negative Hochspannung abgeben kann. Ist nur eine Elektrode an der Hochspannungsaktoreinheit 2 vorgesehen wird eine zweite Elektrode durch ein Fahrzeugteil des Fahrzeugs gebildet. Bei einer möglichen Ausführungsform weist die Hochspannungsaktoreinheit 2 eine gerade Anzahl von Elektroden auf, die alternierend eine positive Hochspannung und eine negative Hochspannung abgeben können. Die Elektroden 12, 13, 14, 15 der Hochspannungsaktoreinheit 2 gemäß Figur 3 bilden gleichzeitig Kondensatorplatten von mindestens einem Kondensator der kapazitiven Sensoreinheit des Abwehrsystems 1. Die kapazitive Sensoreinheit erfasst das Eindringen des Kleinsäugers in den überwachten Raum berührungslos, da das organische Gewebe des eindringenden Kleinsäugers das Dielektrikum innerhalb des elektrischen Feldes und somit die Kapazität C des Kondensators verändert. Das Eindringen eines Kleinsäugers in einen überwachten Bereich der um die Hochspannungsaktoreinheit 2 herum liegt, führt zu einer sensorisch erfassbaren Kapazitätsänderung ΔC. Die Elektroden 12 bis 14 sind bei dem in Figur 3 dargestellten Ausführungsbeispiel Drahtbügel mit mehreren U-förmigen Elektrodenbügel. Die Elektroden bzw. die Elektrodenbügel sind auf einer elektrisch isolierenden Elektrodenträgerplatte 20 montiert, die beispielsweise aus einem elektrisch isolierenden Kunststoff besteht. Die Elektroden 12 bis 14 können alternativ auch durch Elektrodenplatten gebildet werden. Die Elektroden 12 bis 15 der Hochspannungsaktoreinheit 2 sind über die Kontaktschrauben 16, 17, 18, 19 jeweils mit einer in dem Hochspannungskabel 3 verlaufenden elektrischen Leitung 3A, 3B elektrisch verbunden, die an den Hochspannungsgenerator 4B des Steuergerätes 4 und an die Auswerteeinheit 4C des Steuergerätes 4 angeschlossen sind.

Die elektrisch isolierende Elektrodenträgerplatte 20 weist, wie in Figur 3 und Figur 4 dargestellt, mehrere Kurzschlussbarrieren 21, 22, 23 auf, die einen Kurzschlussstrom zwischen Elektroden unterschiedlicher Polarität verhindern. Die Kurzschlussbarrieren 21, 22, 23 weisen eine gewisse Höhe von beispielsweise 3 bis 5 mm auf und besitzen eine Spitze, welche geeignet ist, einen auf der Elektrodenträgerplatte 20 sich bildenden Wasserfilm oder Wassertropfen aufzubrechen. Ein Wasserfilm oder Wassertropfen, der aufgrund von eindringender Feuchtigkeit sich auf der Oberfläche der Elektrodenträgerplatte 20 bildet, wird durch die Barrieren 21, 22, 23 mithilfe der jeweiligen Spitze aufgebrochen bzw. geteilt, sodass ein Stromfluss über diesen Wasserfilm bzw. Wassertropfen von einer Elektrode einer ersten Polarität zu einer Elektrode einer zweiten Polarität verhindert wird. Hierdurch wird die Spannungsquelle bzw. die Batterie 4A des Steuergerätes 4 geschont, sodass die Betriebslaufzeit des Abwehrsystems 1 deutlich gesteigert wird. Bei einer möglichen Ausführungsform beträgt die Betriebslaufzeit des Abwehrsystems 1 mehr als fünf Jahre.

Die Elektrodenträgerplatte 20 kann bei einer möglichen Ausführungsform auf einer Basisplatte 24 montiert sein, die Ausnehmungen zur vereinfachten Montage besitzt. Mithilfe dieser Ausnehmungen kann die Hochspannungsaktoreinheit 2 einfach auf das Hochspannungskabel 3 montiert werden. Weiterhin können Vorrichtungen bzw. Nasen 25, 26, 27, 28 vorgesehen sein, wie in den Figuren 3 und 4 dargestellt. Figur 4 zeigt eine Explosionszeichnung der verschiedenen Bauelemente bzw. Komponenten der in Figur 3 dargestellten Hochspannungsaktoreinheit 2. Die Hochspannungsaktoreinheit 2 besteht allein aus mechanischen Elementen und ist somit besonders robust gegenüber Umwelteinflüssen, wie beispielsweise Temperaturschwankungen, Feuchtigkeit, Verschmutzung und dergleichen.

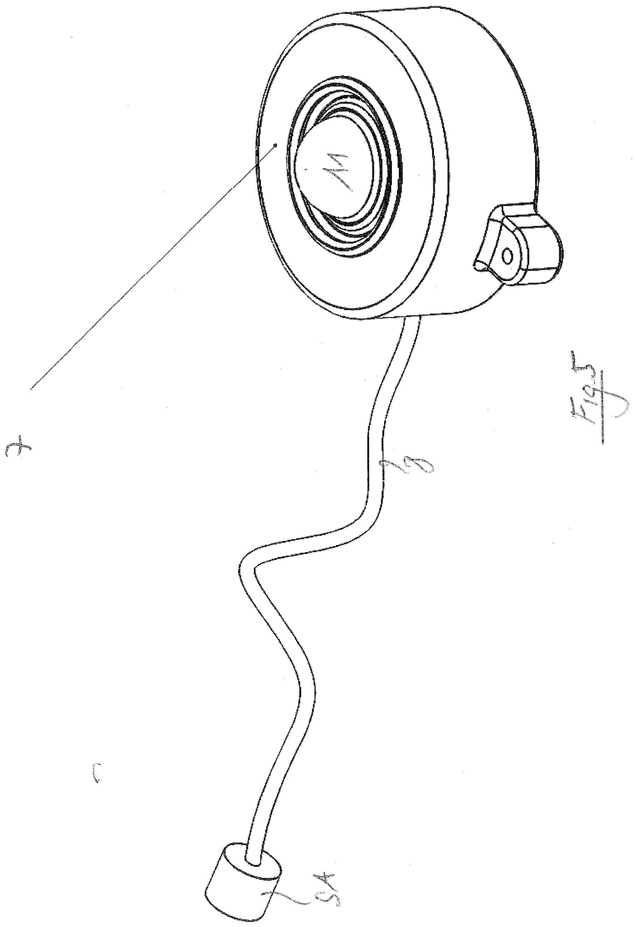

Figur 5 zeigt eine Detailansicht des in Figur 1 dargestellten Ultraschallsenders 7. Man erkennt die halbkreisförmige sphärische Kalotte 11, welche durch Schwingbewegungen sphärisch Ultraschallwellen zur Vertreibung des Kleinsäugers in den überwachten Raum, insbesondere Motorraum, abstrahlt. Der Ultraschallsender 7 ist an das Steuergerät 4 mithilfe des Kabels 8 und des Steckverbinders 9A, 9B anschließbar und kann separat von dem Steuergerät 4 an einer geeigneten Stelle in den überwachten Raum montiert werden.

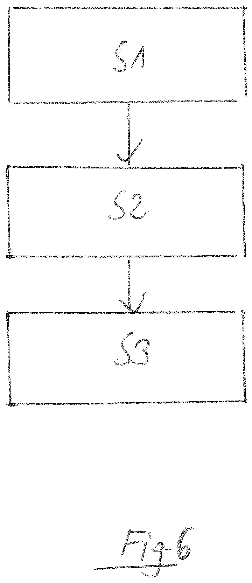

Figur 6 zeigt ein Ablaufdiagramm zur Darstellung eines Ausführungsbeispiels des erfindungsgemäßen Verfahrens zur Abwehr von Kleinsäugern.

In einem ersten Schritt S1 wird das Eindringen eines Kleinsäugers in einen überwachten Raum anhand einer durch den Kleinsäuger verursachten Kapazitätsänderung ΔC eines Kondensators erkannt.

In einem weiteren Schritt S2 wird eine Hochspannungsaktoreinheit 2 aktiviert, sobald das Eindringen eines Kleinsäugers in den überwachten Raum erkannt worden ist.

In einem weiteren Schritt S3 wird eine Hochspannung an den Kleinsäuger durch die Hochspannungsaktoreinheit abgegeben, sobald der eingedrungene Kleinsäuger eine Elektrode der Hochspannungsaktoreinheit berührt.

Das erfindungsgemäße Abwehrsystem 1 ist vorzugsweise in einem Motorraum eines Fahrzeuges eingebaut. Das erfindungsgemäße Abwehrsystem 1 eignet sich jedoch auch für andere Räume, beispielsweise Lagerräume, in denen das Eindringen von Kleinsäugern, beispielsweise Mäusen oder Ratten, verhindert werden soll. Die Ausführung des Abwehrsystems 1 und insbesondere der darin vorgesehenen Hochspannungsaktoreinheiten 2 kann variieren. Bei dem in Figur 3 dargestellten Ausführungsbeispiel kann die Hochspannungsaktoreinheit 2 beispielsweise eine Dimension von etwa 6 x 6 cm aufweisen. Die Höhe der U-förmigen Bügel der Drahtelektroden weist beispielsweise eine Höhe von 10 bis 20 mm auf. Diese Höhe ist geeignet, Spannungsschläge direkt an die Haut eines Kleinsäugers durch dessen Fell hindurch abzugeben. Bei der in Figur 3 dargestellten Ausführungsform werden die Elektroden 12 bis 15 durch drahtförmige Bügel mit mehreren U-förmigen Bügelvorsprüngen gebildet. Alternativ können auch Platten verwendet werden. Der elektrische Kontakt zwischen den Elektroden 12 bis 15 und den Leitungen 3A, 3B des Hochspannungskabels 3 wird durch die Kontaktschrauben 16 bis 19 hergestellt. Hierzu wird die Kontaktschraube jeweils durch einen Isolationsmantel des Hochspannungskabels 3 hindurchgeschraubt. Wie man in Figur 3 erkennen kann, sind die Kontaktschrauben 16, 17 lateral versetzt zu den Kontaktschrauben 18, 19 angeordnet. Hierdurch berühren die Kontaktschrauben 16, 17 beim Hindurchschrauben durch den Isolationsmantel die erste Leitung 3A des Hochspannungskabels 3, während die beiden übrigen Kontaktschrauben 18, 19 die andere Leitung 3B des Hochspannungskabels 3 nach Durchdringen des Isolationsmantels des Kabels 3 berühren. Die Anzahl der auf dem Hochspannungskabel 3 montierten Hochspannungsaktoreinheiten 2 kann je nach Größe und Form des überwachten Raums variieren. In einem Motorraum eines Fahrzeuges können beispielsweise zwei bis zehn Hochspannungsaktoreinheiten 2 auf einem gemeinsamen Hochspannungskabel 3 montiert werden.

## Patentansprüche

1. Abwehrsystem (1) zur Abwehr von Kleinsäugern mit mindestens einer Aktoreinheit, die ausgebildet ist, auf einen in einen überwachten Raum, insbesondere Motorraum, eindringenden Kleinsäuger derart einzuwirken, dass der Kleinsäuger diesen Raum verlässt,
wobei die Aktoreinheit automatisch aktiviert wird, sobald der Kleinsäuger in den überwachten Raum eindringt, und die Aktoreinheit mindestens eine Hochspannungsaktoreinheit (2) aufweist, die Elektroden (12, 13, 14, 15) hat, die ausgebildet sind, bei Berührung durch einen Kleinsäuger eine Hochspannung an diesen Kleinsäuger abzugeben, **dadurch gekennzeichnet, dass**
die Elektroden (12, 13, 14, 15) gleichzeitig Kondensatorplatten von mindestens einem Kondensator einer kapazitiven Sensoreinheit bilden, die ausgebildet ist, das Eindringen des Kleinsäugers in den überwachten Raum berührungslos zu erfassen.

2. Abwehrsystem nach Anspruch 1,
wobei der Kondensator der kapazitiven Sensoreinheit eine Kapazität aufweist, die durch das organische Gewebe des in den überwachten Raum eindringenden Kleinsäugers veränderbar ist.

3. Abwehrsystem nach Anspruch 1 oder 2,
wobei mehrere Hochspannungsaktoreinheiten (2) über ein Hochspannungskabel (3) miteinander verbunden und in dem überwachten Raum verteilt angeordnet sind.

4. Abwehrsystem nach Anspruch 3 ,
wobei die kapazitive Sensoreinheit einer Hochspannungsaktoreinheit (2) über das Hochspannungskabel (3) an eine Auswerteeinheit (4C) eines Steuergerätes (4) des Abwehrsystems (1) angeschlossen ist, die ausgebildet ist, über das Hochspannungskabel (3) empfangene Sensorsignale der kapazitiven Sensoreinheit auszuwerten.

5. Abwehrsystem nach Anspruch 4,
wobei das Steuergerät (4) des Abwehrsystems (1) eine Spannungsquelle (4A) zur Bereitstellung einer elektrischen Gleichspannung und einen Hochspannungsgenerator (4B) zur Erzeugung einer Hochspannung aufweist,
wobei der Hochspannungsgenerator (4B) des Steuergerätes (4) ausgebildet ist, durch die Auswerteeinheit (4C) des Steuergerätes (4) aktiviert zu werden, sobald ein von einer kapazitiven Sensoreinheit empfangenes Sensorsignal ein Eindringen eines Kleinsäugers in den überwachten Raum anzeigt.

6. Abwehrsystem nach Anspruch 5,
wobei das Steuergerät (4) eine Nutzerschnittstelle aufweist, die ausgebildet ist, einem Nutzer Zustandsinformationen des Abwehrsystems (1) anzuzeigen.

7. Abwehrsystem nach einem der vorangehenden Ansprüche 1 bis 6,
wobei als weitere Sensoreinheit des Abwehrsystems (1) mindestens ein optischer Sensor vorgesehen ist, der ausgebildet ist, das Eindringen eines Kleinsäugers in den überwachten Raum an die Auswerteeinheit (4C) des Steuergerätes (4) zu melden, oder als weitere Sensoreinheit des Abwehrsystems (1) mindestens ein Berührungssensor vorgesehen ist, der ausgebildet ist, das Eindringen eines Kleinsäugers in den überwachten Raum bei Berührung oder bei Auftreten von Vibrationen zu erfassen und an die Auswerteeinheit (4C) des Steuergerätes (4) zu melden, oder wobei die Aktoreinheit des Abwehrsystems (1) ferner eine akustische Aktoreinheit zur Abgabe von Schallsignalen, insbesondere mindestens einen Ultraschallsender (7)zur Abgabe von Ultraschallsignalen, und/oder eine optische Aktoreinheit zur Abgabe von Lichtsignalen aufweist.

8. Abwehrsystem nach Anspruch 7,
wobei die akustische Aktoreinheit mindestens einen Ultraschallsender (7) aufweist, der über ein separates Kabel (8, 10)an das Steuergerät (4) des Abwehrsystems (1) anschließbar ist.

9. Abwehrsystem nach einem der vorangehenden Ansprüche 1 bis 8,
wobei der mindestens eine Kondensator der kapazitiven Sensoreinheit in einem Spannungsteiler oder einer Messbrücke verschaltet ist und ausgebildet ist, eine an dem Kondensator aufgrund der Kapazitätsänderung auftretende Spannungsänderung zu erfassen, wobei ein Mikroprozessor der Auswerteeinheit (4C) innerhalb des Steuergerätes (4) des Abwehrsystems (1) ausgebildet ist, die erfasste Spannungsänderung auszuwerten und/oder
wobei der mindestens eine Kondensator der kapazitiven Sensoreinheit in einem Schwingkreis verschaltet ist und ausgebildet ist, eine aufgrund der Kapazitätsänderung auftretende Verstimmung der Schwingkreisfrequenz zu erfassen, wobei der Mikroprozessor der Auswerteeinheit (4C) innerhalb des Steuergerätes (4) des Abwehrsystems (1) ausgebildet ist, die erfasste Verstimmung der Schwingkreisfrequenz auszuwerten, und/oder
wobei eine aufgrund der Kapazitätsänderung auftretende Änderung einer Lade-/Entladezeitkonstante beim Laden/Entladen des mindestens einen Kondensators der kapazitiven Sensoreinheit erfasst wird, wobei der Mikroprozessor der Auswerteeinheit (4C) innerhalb des Steuergerätes (4) des Abwehrsystems ausgebildet ist, die erfasste Änderung der Lade-/Entladezeitkonstante auszuwerten.

10. Hochspannungsaktoreinheit (2) für ein Abwehrsystem (1) nach einem der vorangehenden Ansprüche 1 bis 9, mit mindestens einer Elektrode (12, 13, 14, 15), die ausgebildet ist, bei Berührung durch einen Kleinsäuger an diesen Kleinsäuger eine elektrische Hochspannung abzugeben, wobei die mindestens eine Elektrode (12, 13, 14, 15) gleichzeitig eine Kondensatorplatte von mindestens einem Kondensator der kapazitiven Sensoreinheit bildet, welche ausgebildet ist, die Hochspannungsaktoreinheit (2) bei Eindringen des Kleinsäugers in den überwachten Raum automatisch zur Abgabe von Hochspannungsschlägen zu aktivieren.

11. Hochspannungsaktoreinheit nach Anspruch 10,
wobei die mindestens eine Elektrode (12, 13, 14, 15) auf einer elektrisch isolierenden Elektrodenträgerplatte (20) mittels Kontaktschrauben (16, 17, 18, 19) montiert ist, wobei die mindestens eine Elektrode (12, 13, 14, 15) der Hochspannungsaktoreinheit (2) mindestens einen U-förmigen Elektrodenbügel aufweist, der senkrecht von der Elektrodenträgerplatte (20) absteht oder durch eine Elektrodenplatte gebildet ist.

12. Hochspannungsaktoreinheit nach Anspruch 11,
wobei die elektrisch isolierende Elektrodenträgerplatte (20) zwischen den darauf montierten Elektroden (12, 13, 14, 15) hervorstehende Kurzschlussbarrieren (21, 22, 23) aufweist, die ausgebildet sind, einen elektrischen Kurzschlussstrom zwischen den Elektroden (12, 13, 14, 15) der Hochspannungsaktoreinheit (2) zu verhindern.

13. Verfahren zum Abwehren von Kleinsäugern mit den folgenden Schritten:
(a) Erkennen (S1) eines Eindringens eines Kleinsäugers in einen überwachten Raum anhand einer durch den Kleinsäuger verursachten Kapazitätsänderung eines Kondensators;
(b) Aktivieren (S2) einer Hochspannungsaktoreinheit (2), sobald das Eindringen des Kleinsäugers in den überwachten Raum erkannt wird; und
(c) Abgeben (S3) einer Hochspannung an den Kleinsäuger durch die Hochspannungsaktoreinheit (2), sobald der eindringende Kleinsäuger eine Elektrode der Hochspannungsaktoreinheit (2) berührt,
**dadurch gekennzeichnet, dass**
die Hochspannungsaktoreinheit (2) Elektroden (12, 13, 14, 15) zum Abgeben einer Hochspannung an den Kleinsäuger aufweist, die gleichzeitig Kondensatorplatten des Kondensators bilden.

## Claims

1. Protection system (1) for protection against small mammals, comprising at least one actuator unit which is configured to act on a small mammal which is invading a monitored space, in particular an engine space, in such a way that the small mammal leaves this space,
the actuator unit being activated automatically as soon as the small mammal invades the monitored space, and the actuator unit having at least one high-voltage actuator unit (2) which has electrodes (12, 13, 14, 15) which are configured so as to deliver a high voltage to a small mammal when contacted by said small mammal,
**characterised in that**
the electrodes (12, 13, 14, 15) simultaneously form capacitor plates of at least one capacitor of a capacitive sensor unit, which is configured to detect contactlessly the invasion of the monitored space by the small mammal.

2. Protection system according to claim 1,
wherein the capacitor of the capacitive sensor unit has a capacitance which can be altered by the organic tissue of the small mammal invading the monitored space.

3. Protection system according to either claim 1 or claim 2,
wherein a plurality of high-voltage actuator units (2) are interconnected via a high-voltage cable (3) and arranged distributed in the monitored space.

4. Protection system according to claim 3,
wherein the capacitive sensor unit of a high-voltage actuator unit (2) is connected via the high-voltage cable (3) to an evaluation unit (4C) of a control device (4) of the protection system (1), said unit being configured to evaluate sensor signals of the capacitive sensor unit which are received via the high-voltage cable (3).

5. Protection system according to claim 4,
wherein the control device (4) of the protection system (1) has a voltage source (4A) for supplying a DC electrical voltage and a high-voltage generator (4B) for generating a high voltage,
wherein the high-voltage generator (4B) of the control device (4) is configured to be activated by the evaluation unit (4C) of the control device (4) as soon as a sensor signal received from a capacitive sensor unit indicates invasion of the monitored space by a small mammal.

6. Protection system according to claim 5,
wherein the control device (4) has a user interface which is configured to display state information of the protection system (1) to a user.

7. Protection system according to any of preceding claims 1 to 6,
wherein at least one optical sensor is provided as a further sensor unit of the protection system (1) and is configured to report the invasion of the monitored space by a small mammal to the evaluation unit (4C) of the control device (4), or at least one contact sensor is provided as a further sensor unit of the protection system (1) and is configured to detect the invasion of the monitored space by a small mammal upon contact or when vibrations occur and to report it to the evaluation unit (4C) of the control unit (4), or wherein the actuator unit of the protection system (1) further has an acoustic actuator unit for emitting sound signals, in particular at least one ultrasound transmitter (7) for emitting ultrasound signals, and/or an optical actuator unit for emitting light signals.

8. Protection system according to claim 7,
wherein the acoustic actuator unit has at least one ultrasound transmitter (7), which can be connected to the control device (4) of the protection system (1) via a separate cable (8, 10).

9. Protection system according to any of preceding claims 1 to 8,
wherein the at least one capacitor of the capacitive sensor unit is wired within a voltage distributor or a measurement bridge and is configured to detect a change in voltage which occurs at the capacitor as a result of the change in capacitance, a microprocessor of the evaluation unit (4C) within the control device (4) of the protection system (1) being configured to evaluate the detected change in voltage, and/or
wherein the at least one capacitor of the capacitive sensor unit is wired within an oscillatory circuit and is configured to detect a detuning of the oscillatory circuit frequency which occurs as a result of the change in capacitance, the microprocessor of the evaluation unit (4C) within the control device (4) of the protection system (1) being configured to evaluate the detected detuning of the oscillatory circuit frequency, and/or
wherein a change in a charging/discharging time constant which occurs as a result of the change in capacitance is detected during the charging/discharging of the at least one capacitor of the capacitive sensor unit, the microprocessor of the evaluation unit (4C) within the control device (4) of the protection system being configured to evaluate the detected change in the charging/discharging time constant.

10. High-voltage actuator unit (2) for a protection system (1) according to any of preceding claims 1 to 9,
comprising at least one electrode (12, 13, 14, 15) which is configured so as to deliver a high electrical voltage to a small mammal when contacted by said small mammal, wherein the at least one electrode (12, 13, 14, 15) simultaneously forms a capacitor plate of at least one capacitor of the capacitive sensor unit, which is configured to activate automatically the high-voltage actuator unit (2) to output high-voltage shocks when the monitored space is invaded by the small mammal.

11. High-voltage actuator unit according to claim 10,
wherein the at least one electrode (12, 13, 14, 15) is mounted on an electrically insulating electrode carrier plate (20) by means of contact screws (16, 17, 18, 19), wherein the at least one electrode (12, 13, 14, 15) of the high-voltage actuator unit (2) has at least one U-shaped electrode bracket, which protrudes perpendicularly from the electrode carrier plate (20) or is configured by an electrode plate.

12. High-voltage actuator unit according to claim 11,
wherein the electrically insulating electrode carrier plate (20) has short-circuit barriers (21, 22, 23) which project between the electrodes (12, 13, 14, 15) mounted on said plate and which are configured to prevent an electrical short-circuit current between the electrodes (12, 13, 14, 15) of the high-voltage actuator unit (2).

13. Method for protecting against small mammals, comprising the following steps:
(a) detecting (S1) invasion of a monitored space by a small mammal by way of a change, caused by the small mammal, in the capacitance of a capacitor;
(b) activating (S2) a high-voltage actuator unit (2) as soon as the invasion of the monitored space by the small mammal is detected; and
(c) delivering (S3) a high voltage to the small mammal from the high-voltage actuator unit (2) as soon as the invading small mammal contacts an electrode of the high-voltage actuator unit (2),
**characterised in that**
the high-voltage actuator unit (2) has electrodes (12, 13, 14, 15) for delivering a high voltage to the small mammal, which simultaneously form capacitor plates of the capacitor.

## Revendications

1. Système répulsif (1) destiné à la répulsion de micromammifères, comportant au moins une unité d'actionneur, laquelle est configurée pour agir sur un micromammifère pénétrant dans un espace surveillé, en particulier un compartiment moteur, de sorte que le micromammifère quitte cet espace,
dans lequel l'unité d'actionneur est automatiquement activée dès que le micromammifère pénètre dans l'espace surveillé, et l'unité d'actionneur comporte au moins une unité d'actionneur haute tension (2) ayant des électrodes (12, 13, 14, 15), lesquelles sont configurées pour délivrer, lors d'un contact par un micromammifère, une haute tension à ce micromammifère,
**caractérisé en ce que** les électrodes (12, 13, 14, 15) forment simultanément des plaques de condensateur d'au moins un condensateur d'une unité de capteur capacitive, laquelle est configurée pour saisir sans contact la pénétration du micromammifère dans l'espace surveillé.

2. Système répulsif selon la revendication 1,
dans lequel le condensateur de l'unité de capteur capacitive présente une capacité modifiable par les tissus organiques du micromammifère pénétrant dans l'espace surveillé.

3. Système répulsif selon la revendication 1 ou 2,
dans lequel plusieurs unités d'actionneur haute tension (2) sont reliées l'une à l'autre par le biais d'un câble haute tension (3) et sont disposées réparties dans l'espace surveillé.

4. Système répulsif selon la revendication 3,
dans lequel l'unité de capteur capacitive d'une unité d'actionneur haute tension (2) est raccordée par le biais du câble haute tension (3) à une unité de traitement (4C) d'un dispositif de commande (4) du système répulsif (1), laquelle est configurée pour traiter les signaux de capteur de l'unité de capteur capacitive reçus par le biais du câble haute tension (3).

5. Système répulsif selon la revendication 4,
dans lequel le dispositif de commande (4) du système répulsif (1) comporte une source de tension (4A) destinée à fournir une tension électrique continue et un générateur haute tension (4B) destiné à générer une haute tension,
dans lequel le générateur haute tension (4B) du dispositif de commande (4) est configuré pour être activé par l'unité de traitement (4C) du dispositif de commande (4) dès qu'un signal de capteur reçu depuis une unité de capteur capacitive indique une pénétration d'un micromammifère dans l'espace surveillé.

6. Système répulsif selon la revendication 5,
dans lequel le dispositif de commande (4) comporte une interface utilisateur, laquelle est configurée pour afficher des informations d'état du système répulsif (1) pour un utilisateur.

7. Système répulsif selon l'une des revendications précédentes 1 à 6,
dans lequel au moins un capteur optique est prévu comme unité de capteur supplémentaire du système répulsif (1), lequel est configuré pour signaler à l'unité de traitement (4C) du dispositif de commande (4) la pénétration d'un micromammifère dans l'espace surveillé, ou au moins un capteur de contact est prévu comme unité de capteur supplémentaire du système répulsif (1), lequel est configuré pour saisir par contact ou par apparition de vibrations la pénétration d'un micromammifère dans l'espace surveillé et la signaler à l'unité de traitement (4C) du dispositif de commande (4), ou dans lequel l'unité d'actionneur du système répulsif (1) comporte en outre une unité d'actionneur acoustique destinée à délivrer des signaux sonores, en particulier au moins un émetteur d'ultrasons (7) destiné à délivrer des signaux ultrasonores, et/ou une unité d'actionneur optique destinée à délivrer des signaux lumineux.

8. Système répulsif selon la revendication 7,
dans lequel l'unité d'actionneur acoustique comporte au moins un émetteur d'ultrasons (7), lequel est raccordable au dispositif de commande (4) du système répulsif (1) par le biais d'un câble séparé (8, 10).

9. Système répulsif selon l'une des revendications précédentes 1 à 8,
dans lequel l'au moins un condensateur de l'unité de capteur capacitive est monté dans un diviseur de tension ou un pont de mesure et est configuré pour saisir une variation de tension se produisant aux bornes du condensateur en raison de la variation de la capacité, dans lequel un microprocesseur de l'unité de traitement (4C) est configuré à l'intérieur du dispositif de commande (4) du système répulsif (1) pour traiter la variation de tension saisie et/ou
dans lequel l'au moins un condensateur de l'unité de capteur capacitive est interconnecté dans un circuit oscillant et est configuré pour saisir un désaccord de la fréquence du circuit oscillant en raison de la variation de la capacité, dans lequel le microprocesseur de l'unité de traitement (4C) est configuré à l'intérieur du dispositif de commande (4) du système répulsif (1) pour traiter le désaccord de la fréquence du circuit oscillant saisi, et/ou
dans lequel une variation d'une constante de temps de charge/décharge se produisant en raison de la variation de capacité lors de la charge/décharge de l'au moins un condensateur de l'unité de capteur capacitive est saisie, dans lequel le microprocesseur de l'unité de traitement (4C) est configuré à l'intérieur du dispositif de commande (4) du système répulsif (1) pour traiter la variation de la constante de temps de charge/décharge saisie.

10. Unité d'actionneur haute tension (2) pour un système répulsif (1) selon l'une des revendications précédentes 1 à 9,
comportant au moins une électrode (12, 13, 14, 15), laquelle est configurée pour délivrer, lors d'un contact par un micromammifère, une haute tension électrique à ce micromammifère, dans laquelle l'au moins une électrode (12, 13, 14, 15) forme simultanément une plaque de condensateur d'au moins un condensateur de l'unité de capteur capacitive, laquelle est configurée pour activer automatiquement l'unité d'actionneur haute tension (2) afin qu'elle délivre des chocs haute tension lors de la pénétration du micromammifère dans l'espace surveillé.

11. Unité d'actionneur haute tension selon la revendication 10, dans laquelle l'au moins une électrode (12, 13, 14, 15) est montée sur une plaque porte-électrode électriquement isolante (20) au moyen de vis de contact (16, 17, 18, 19), dans laquelle l'au moins une électrode (12, 13, 14, 15) de l'unité d'actionneur haute tension (2) comporte au moins un étrier d'électrode en forme de U, lequel dépasse verticalement de la plaque porte-électrode (20) ou est formé à travers une plaque d'électrode.

12. Unité d'actionneur haute tension selon la revendication 11, dans laquelle la plaque porte-électrode électriquement isolante (20) comporte des barrières de court-circuit (21, 22, 23) saillant entre les électrodes (12, 13, 14, 15) montées sur celle-ci, lesquelles sont configurées pour prévenir un courant de court-circuit électrique entre les électrodes (12, 13, 14, 15) de l'unité d'actionneur haute tension (2).

13. Procédé destiné à repousser des micromammifères comportant les étapes suivantes consistant à :
(a) détecter (S1) une pénétration d'un micromammifère dans un espace surveillé à l'aide d'une variation de capacité d'un condensateur provoquée par le micromammifère ;
(b) activer (S2) une unité d'actionneur haute tension (2) dès que la pénétration du micromammifère dans l'espace surveillé est reconnue ; et
(c) délivrer (S3) une haute tension sur le micromammifère par l'unité d'actionneur haute tension (2) dès que le micromammifère pénétrant entre en contact avec une électrode de l'unité d'actionneur haute tension (2),
**caractérisé en ce que** l'unité d'actionneur haute tension (2) comporte des électrodes (12, 13, 14, 15) pour délivrer une haute tension sur le micromammifère, formant simultanément des plaques de condensateur du condensateur.
